# EUROPÄISCHE PATENTSCHRIFT

(11) **EP 1 299 000 B1**
(45) Veröffentlichungstag und Bekanntmachung des Hinweises auf die Patenterteilung: **23.08.2006**
(21) Anmeldenummer: 00943890.4
(22) Anmeldetag: 26.06.2000
(51) Int. Cl.: A22C 13/00

(54) **POLYAMID-KUNSTSTOFFDARM MIT NANODISPERSEN ADDITIVEN SOWIE DESSEN VERWENDUNG ALS NAHRUNGSMITTELHÜLLE**
POLYAMIDE PLASTIC GUT COMPRISING NANO DISPERSED ADDITIVES AND THE USE THEREOF AS A NUTRIMENT COVERING
BOYAU ARTIFICIEL EN POLYAMIDE A ADDITIFS NANODISPERSES ET SON UTILISATION COMME ENVELOPPE D'ALIMENT

(43) Veröffentlichungstag der Anmeldung: 09.04.2003
(73) Patentinhaber: CaseTech GmbH & Co. KG, 29656 Walsrode (DE)
(72) Erfinder: POPHUSEN, Dirk, D-51467 Bergisch-Gladbach (DE); SCHRÖDER, Nils, D-29683 Fallingbostel (DE); WOLF, Detlef, D-29683 Fallingbostel (DE); EGGERS, Holger, S-26035 Odakra (SE)
(74) Vertreter: Feldhues, Michael L.F.
(86) Internationale Anmeldenummer: PCT/EP2000/005895
(87) Internationale Veröffentlichungsnummer: WO 2002/000026

(56) Entgegenhaltungen:
- EP-A- 0 658 310
- EP-A- 0 810 259
- EP-A- 0 810 260
- EP-A- 0 818 508
- EP-A- 0 879 560
- DE-A- 19 631 348
- DE-A- 19 847 845

## Beschreibung

Die vorliegende Erfindung betrifft einen biaxial gereckten Polyamid-Kunststoffdarm, enthaltend nano-disperse Additive, insbesondere Schichtsilikate, sowie dessen Verwendung als Nahrungsmittelhülle. Eine derartige Hülle ist aus beispielsweise DE-A-196 31 348 bekannt.

Nahrungsmittelhüllen wie z.B. die Umhüllungen von Brüh- und Kochwürsten müssen bekannterweise ein umfangreiches spezifisches Anforderungsprofil erfüllen um den Anwendungen in der Praxis gerecht zu werden.

Zu diesen Forderungen zählen:
- hohe Festigkeit, zylindrische Form, Prallheit (faltenfreies Anliegen der Hülle)
- hohe Schrumpffähigkeit
- gutes streifenförmiges Schälverhalten
- Temperaturbeständigkeit bis Sterilisationstemperatur
- sehr gute Barriereeigenschaften gegen Sauerstoff, Wasserdampf und Licht (Reduktion von Gewichtsverlusten und Brätvergrauung)
- hohe Bräthaftung
- leichte Schälbarkeit, gutes Anschnittverhalten
- Raffbarkeit
- Ökologische Unbedenklichkeit laut Lebensmittelrecht (lt. BGVV, EG, FDA-Richtlinien)
- sichere Druckfarbenhaftung

Die bisher im Markt bekannten Hüllen genügen nicht allen im Anforderungsprofil aufgeführten Punkten. Es hat zahlreiche Anstrengungen der Hersteller solcher Hüllen gegeben, insbesondere die Lagerfähigkeit der in diesen Hüllen gefertigten Würste durch die Verbesserung der Barriereeigenschaften der Hüllen zu verlängern. Durch die Reduktion der Barriere gegen Wasserdampf wird eine Austrockung über die Lagerzeit verhindert. Durch eine Reduktion der Durchlässigkeit gegen Sauerstoff wird eine Oxidation des Wurstbrätes verhindert.

In der EP 0 658 310 wird eine mindestens 4-schichtige coextrudierte, biaxial verstreckte, transparente, schlauchförmige Wursthülle mit hoher Barrierewirkung gegenüber Wasserdampf- und Sauerstoffpermeation und Lichtdurchlässigkeit beschrieben. Die Sperrwirkung gegen Wasserdampf wird durch mindestens eine Schicht mit polyolefinischem Charakter erzeugt, die Sauerstoffsperrwirkung durch mindestens eine Schicht enthaltend überwiegend Ethylen/Vinylalkohol-Copolymere. Zusätzlich enthält eine Schicht des coextrudierten Verbundes feinstteilige, anorganische Pigmente mit einer mittleren Korngröße zwischen 0,01 und 5 Mikrometern in einer Menge von bis zu 3 Gew.-% bezogen auf das Gesamtgewicht der Hülle. Bei diesem Feinstpigment, das z.B. als Masterbatch, dessen Trägermaterial dem Grundmaterial der Schicht kompatibel ist, in den Folienverbund eingebracht wird, kann es sich z.B. um anorganische Pigmente aus Zinkoxid, Titandioxid, Eisenoxid oder Siliciumdioxid handeln. Bei einer Partikelgröße von kleiner 5 µm wird die Transparenz der Hülle kaum beeinflußt. Eine solche Hülle zeigt eine Reduktion der Vergrauung der Wurstoberfläche durch die Reduktion der Lichtdurchlässigkeit, eine Reduktion der Sauerstoffdurchlässigkeit durch die Zugabe der Feinstpigmente konnte jedoch nicht festgestellt werden. Die über die EVOH enthaltene Schicht erzeugte Sauerstoffbarriere ist bekanntermaßen zudem stark feuchteabhängig. Der Zusammenhang der Sauerstoffdiffusion und der relativen Feuchte wird für verschiedene Polymere in Verpackung mit Kunststoffen (O.E. Ahlhaus, Carl Hanser Verlag, München, 1997, S. 375) wiedergegeben. Danach reduziert sich für EVOH die Sauerstoffdiffusion bei 30°C von 0,15 cm² 25 µm / m² d bar bei 30 % rel. Feuchte auf 1,5 cm² 25 µm/m² d bar bei 75 % rel. Feuchte.

In der DE 43 39 337 wird eine fünfschichtige Schlauchfolie zur Verpackung und Umhüllung von pastösen Lebensmitteln beschrieben. Diese Schlauchfolie, insbesondere Wursthülle, auf Basis Polyamid ist dadurch gekennzeichnet, daß sie aus einer inneren und einer äußeren Schicht aus dem gleichen Polyamidmaterial, bestehend aus wenigstens einem aliphatischem Polyamid und/oder wenigstens einem aliphatischem Copolyamid und/oder wenigstens einem teilaromatische Polyamid und/oder wenigstens aus einem teilaromatischen Copolyamid, einer mittleren Polyolefinschicht sowie aus zwei aus dem gleichen Material bestehenden Haftvermittlerschichten aufgebaut ist. Der Anteil des teilaromatischen Polyamids und/oder Copolyamids beträgt 5 bis 60%, insbesondere 10 - 50%, bezogen auf das Gesamtgewicht der Polymermischung aus teilaromatischen und aliphatischen Polyamiden und Copolyamiden. Der Nachteil dieser Hülle ist die nicht ausreichende Barriere gegen Sauerstoff, die oftmals zu einer Farbveränderung (Vergrauung) von oxidationsempfindlichen Füllgütern wie Leberwurst führt.

In der EP 0 879 560 wird eine mehrschichtige, biaxial verstreckte Nahrungsmittelhülle mit zwei Sauerstoff-Barriereschichten beschrieben. Die Sauerstoffsperrwirkung wird hier im wesentlichen durch eine Ethylen/Vinylalkohol-Copolymer enthaltene Schicht bewirkt. Die Sauerstoffbarriere von Ethylen/Vinylalkohol-Copolymer ist bekanntermaßen stark feuchteabhängig, so daß insbesondere bei Heißdampfsterilisationsanwendungen die Barriere nicht ausreichend ist. Durch die Abmischung des Ethylen/Vinylalkohol-Copolymern wird die Feuchteempfindlichkeit der Barriere zwar reduziert aber auch das Gesamtniveau der Barriere deutlich reduziert.

In der EP 810259 werden Polyamidformmassen enthaltend nanodisperse Füllstoffe, sowie Folien oder Hohlkörper enthaltend eine entsprechende Polyamidschicht beschrieben. Durch Zugabe genügend feinteiliger Oxide, Oxidhydrate oder Carbonate kann die dort gewünschte Barnerewirkung des Polyamids verbessert werden. Die Folien werden durch Extrusion oder Coextrusion und insbesondere nach dem Chillroll-Verfahren oder nach dem Blasextrusionsverfahren hergestellt. Der Einsatz und die Herstellung über ein Folienreckverfahren wird nicht beschrieben und ist auch nicht naheliegend. Die erfindungsgemäß hergestellten Folien können zu Verpackungszwecken eingesetzt werden, so auch für die Verpackung von Lebensmitteln wie Fleisch, Wurst und Käse. Da diese Folien nicht verstreckt sind, weisen sie eine für die Anwendung nicht ausreichende Festigkeit und Schrumpffähigkeit auf.

In der WO 93/04118 wird ein Polymer-Nano-Komposit mit plättchenförmigen Partikeln im Dickenbereich von wenigen Nanometern beschrieben. Mit diesen Materialien sollen über konventionelle Folienextrusionstechnologien Folien im Dickenbereich insbesondere zwischen 25 und 75 µm hergestellt werden können. Dabei können diese gefertigten Folien optional "gereckt" sein, z.B. über ein Blasfolienverfahren. Die hier beschriebene "Reckung" erfolgt allerdings direkt im Anschluß an die Düse. Bei diesem Verfahren spricht der Fachmann von einer Schmelzeorientierung. Diese Orientierung unterscheidet sich maßgeblich von der biaxialen Reckung aus dem Festkörperzustand. Auch die in dieser Schrift beschriebenen Folien sind aufgrund der nicht ausreichenden Verstreckung für den Einsatz als künstliche Wursthüllen nicht geeignet.

In der EP 0 358 415 wird eine Formmasse aus einem Polyamidharz mit einem darin gleichmäßig dispergierten Schichtsilikat beschrieben. Die einzelnen Schichten des Schichtsilikats weisen Dicken um 1 nm und Seitenlängen bis hinauf zu 1 µm auf. Mit diesem Material aus Polyamid 6 als Basispolymer können so Formteile wie z.B. auch Folien mit signifikant erhöhter Sauerstoffbarriere hergestellt werden. Die prinzipielle Möglichkeit der Verstreckung solcher Folien wird in dieser EP aufgeführt. Die erreichten Reckgrade von jeweils Faktor 2 im Längs- und im Querreckteil führen zu maximalen Flächenreckgraden von 4. Dieser geringe Flächenreckgrad reicht aber für die Erreichung einer ausreichenden Schrumpffähigkeit zur Erzielung von faltenfreien Kunststoffdarm-Produkten und einer ausreichenden Festigkeit zur Erzielung einer guten Dimensionsstabilität einer Schlauchfolie bzw. der darin hergestellten Produkte bei weitem nicht aus. Der Fachmann spricht erst bei Flächenreckgraden größer 6 und insbesondere von größer 8 von ausreichender Festigkeit und Schrumpffähigkeit für die Anwendung Kunststoffdarm.

Es stellte sich daher die Aufgabe, eine schrumpfbare biaxial gereckte Nahrungsmittelhülle auf Polyamidbasis herzustellen, die bei hoher Tranzparenz eine deutlich verbesserte Barriere gegen Sauerstoff bietet.

Gegenstand der Erfindung ist ein schlauchförmiger biaxial verstreckter, gegebenenfalls mehrschichtiger Kunststoffdarm gemäß Anspruch 1.

Die biaxiale Reckung der erfindungsgemäßen Polyamid-Kunststoffdärme erfolgt dabei aus dem Festkörperzustand, bei dem ein aus einer Düse austretender schmelzeorientierter Schlauch zuerst in den Festkörperzustand überführt und damit unter seine Glasübergangstemperatur abgekühlt und anschließend auf eine die Verstreckung ermöglichende Temperatur wiedererwärmt und dann biaxial verstreckt wird.

Als aliphatische Polyamide und aliphatische Copolyamide eignen sich solche Polyamide, wie sie in allgemeiner Weise im Kunststoffhandbuch 3/4 "Polyamide" Seite 22 ff., Carl Hanser Verlag München Wien, 1998 beschrieben sind. Das aliphatische Polyamid ist ein Homopolyamid aus aliphatischen primären Diaminen und aliphatischen Dicarbonsäuren oder ein Homopolymerisat von ω-Aminocarbonsäuren oder deren Lactamen. Das aliphatische Copolyamid enthält die gleichen Einheiten und ist z.B. ein Polymer auf Basis von einem oder mehreren aliphatischen Diaminen und einer oder mehrerer Dicarbonsäuren und/oder einer oder verschiedener ω-Aminocarbonsäuren oder deren Lactamen. Die aliphatischen primären Diamine enthalten insbesondere 4 bis 8 C-Atome. Geeignete Diamine sind Tetra-, Penta, Hexa- und Octamethylendiamin, besonders bevorzugt ist Hexamethylendiamin. Die aliphatischen Dicarbonsäuren enthalten insbesondere 4 bis 12 C-Atome. Beispiele für geeignete Dicarbonsäuren sind Adipinsäure, Azelainsäure, Sebazinsäure und Dodecandicarbonsäure. Die ω-Aminocarbonsäuren bzw. deren Lactame enthalten 6 bis 12 C-Atome. Ein Beispiel für ω-Aminocarbonsäure ist die 11-Aminoundecansäure. Beispiele für Lactame sind ε-Caprolactam und ω-Laurinlactam. Besonders bevorzugte aliphatische Polyamide sind Polycaprolactam (PA 6) und Polyhexamethylenadipinamid (PA66). Ein besonders bevorzugtes aliphatisches Copolyamid ist PA 6/66, das aus Caprolactam-, Hexamethylendiamin- und Adipinsäureeinheiten besteht.

Polyamide mit aromatischen Komponenten werden ebenso im Kunststoffhandbuch 3/4 "Polyamide" Seite 803 ff Carl Hanser Verlag München Wien, 1998 beschrieben. Für Extrusionszwecke kommen insbesondere teilaromatische Polyamide und Copolyamide in Frage. Bei den teilaromatischen Polyamiden und Copolyamiden können entweder die Diamineinheiten überwiegend oder ausschließlich die aromatischen Einheiten bilden, während die Dicarbonsäureeinheiten überwiegend oder ausschließlich aliphatischer Natur sind, oder die Diamineinheiten sind überwiegend oder ausschließlich aliphatischer Natur, während die Dicarbonsäureinheiten überwiegend oder ausschließlich die aromatischen Einheiten bilden. Beispiele für die erste Ausführungsform sind teilaromatische Polyamide oder Copolyamide, bei denen die aromatischen Diamineinheiten aus Xylylendiamin und Phenylendiamin bestehen. Die aliphatischen Dicarbonsäureeinheiten dieser Ausführungsform enthalten gewöhnlich 4 bis 10 C-Atome, wie z.B. Adipinsäure, Sebazinsäure und Azelainsäure. Neben den aromatischen Diamineinheiten und den aliphatischen Dicarbonsäureeinheiten können auch noch aliphatische Diamineinheiten und aromatische Dicarbonsäureeinheiten in Mengen von jeweils bis zu 5 Mol-% enthalten sein. Eine besonders bevorzugte Ausführungsform besteht aus m-Xylylendiamin- und Adipinsäure-Einheiten. Dieses Polyamid (PA-MXD6) wird z.B. von der Firma Mitsubishi Gas Chemical Company Inc. unter dem Namen MX-Nylon vertrieben. Beispiel für die zweite Ausführungsform sind teilaromatische Polyamide und Copolyamide, bei denen die aliphatischen Diamine gewöhnlich 4 bis 8 C-Atome besitzen. Unter den aromatischen Dicarbonsäuren sind insbesondere Isophthalsäure und Terephthalsäure hervorzuheben. Neben den aliphatischen Diamineinheiten und den aromatischen Dicarbonsäureeinheiten können auch noch aromatische Diamineinheiten und aliphatische Dicarbonsäureeinheiten in Mengen von jeweils bis zu 5 Mol-% enthalten sein. Eine besonders bevorzugte Ausführungsform besteht aus Einheiten von Hexamethylendiamin, Isophthalsäure und Terephthalsäure. Dieses Polyamid (PA6I/6T) wird z.B. von der Fa. Du Pont De Nemours unter dem Namen Selar PA vertrieben. Die Zugabe von teilaromatischem Polyamid PA6I/6T erfolgt in bevorzugter Weise in Mengen zwischen 2 und 40 Gew.-% pro Schicht, insbesondere zwischen 5 und 20 Gew.-%. Die Zugabe von teilaromatischem Polyamid PA-MXD6 erfolgt in bevorzugter Weise in Mengen zwischen 5 und 40 Gew.-% pro Schicht, insbesondere zwischen 10 und 30 Gew.-%.

Der Gewichtsanteil der nanoskaligen Partikel, bezogen auf das Gewicht der Nanopartikel enthaltenden Schicht, in der die anisotropen nanoskaligen Partikel dispergiert sind, liegt vorzugsweise zwischen 0,1 % und 4 %. Die Dicke dieser Teilchen ist bevorzugt kleiner 10 nm. Bevorzugt sind Partikel, deren kleinste in der Dispersion eine starre Einheit bildende Teilchen in zwei senkrecht zueinander stehenden, beliebig wählbaren Richtungen jeweils eine Ausdehnung von wenigstens dem Zehnfachen der Ausdehnung der Teilchen in der Richtung der geringsten Ausdehnung aufweisen. Die eingesetzten nanoskaligen Partikel sind Schichtsilikate, bevorzugt organisch modifizierte Schichtsilikate. Diese können sein aus der Gruppe umfassend Phyllosilikate, wie vorzugsweise Magnesiumsilikat oder Aluminiumsilikat, sowie Saponit, Beidellit, Nontronit, Hectorit, Stevensit, Vermiculit, Halloysit und Smektite, wie Hektomit und insbesondere Montmorillonit oder deren synthetische Analoga.

Die Herstellung und die Eigenschaften dieser Nanocomposites auf Schichtsilikatbasis ist bekannt (Zilg, Dietsche, Engelhardt und Mülhaupt in Kunststoffe 88 (1998) S. 1812-1820).

Neben den verbesserten mechanischen Eigenschaften ergeben sich Vorteile hinsichtlich der Sperrwirkung gegen Gase wie beispielsweise Sauerstoff Herausgestellt wird insbesondere auch die nukleierende Wirkung dieser Nanocomposites.

Zur Verbesserung der Wasserdampfbarriere kann der Kunststoffdarm vorzugsweise auch coextrudiert werden, wobei der Gesamtverbund dann z.B. gegebenenfalls zusätzliche polyolefinische Sperrschichten enthält, die direkt oder auch über Haftvermittlerschichten angebunden sind.

Geeignete Polyolefine sind Homopolymere von Ethylen oder Propylen oder Copolymere von linearen α-Olefinen mit 2 bis 8 C-Atomen oder Mischungen dieser Homopolymere oder Copolymere untereinander.

Die gegebenenfalls vorhandenen Haftvermittlerschichten bestehen bevorzugt aus modifizierten Polyolefinen. Es handelt sich dabei um modifizierte Homo- und Copolymere des Ethylens oder Propylen und gegebenenfalls weiterer linearer α-Olefine mit 3 bis 8 C-Atomen, die Monomere aus der Gruppe der α,β-ungesättigten Dicarbonsäuren, wie z.B. Maleinsäure, Fumarsäure, Itaconsäure oder deren Säureanhydride, Säureester, Säureamide oder Säureimide aufgepropft enthalten. Weiterhin geeignet sind Copolymerisate von Ethylen und Propylen und gegebenenfalls weiteren linearen α-Olefinen mit 3 bis 8 C-Atomen mit α,β-ungesättigten Carbonsäuren, wie Acrylsäure, Methacrylsäure und/oder deren Metallsalze und/oder deren Alkylester oder entsprechende Propfpolymere der genannten Monomere auf Polymere oder partiell verseifte Ethylen/Vinylacetat-Copolymerisate, die gegebenenfalls mit einem Monomer der genannten Säuren pfropfpolymerisiert sind. Die Schichtdicken der Haftvermittlerschichten liegen in einer bevorzugten Ausführungsform zwischen 1 und 6 µm.

Ebenso können weitere Schichten mit sauerstoffsperrendem Charakter in den coextrudierten Verbund integriert werden.

Die Schichten mit sauerstoffsperrendem Charakter bestehen insbesondere im wesentlichen aus Ethylen/Vinylalkohol-Copolymeren. Der Ethylengehalt liegt dabei vorzugsweise zwischen 25 und 53 Gew.-% und insbesondere zwischen 29 und 35 Gew.-%. Die Schichtdicke der Schichten liegt in einer bevorzugten Ausführungsform zwischen 2 und 8 µm, insbesondere zwischen 3 und 5 µm.

Neben der Möglichkeit Schichten mit wasserdampf- oder sauerstoffsperrendem Charakter als separate Schichten zu coextrudieren ist es ebenso möglich diese Polymere in die bestehenden Schichten als Blendkomponenten zuzugeben.

Die Summe aller Schichtdicken der (co)-extrudierten Hülle beträgt 30 bis 100 µm, insbesondere 40 bis 60 µm.

Die Hüllen weisen üblicherweise einen freien Schrumpf quer zur Extrusionsrichtung gemessen bei 100 °C nach 15 min zwischen 5 und 25 %, insbesondere zwischen 10 und 20 % auf. Unter 40° C liegt der freie Schrumpf bei unter 6% und insbesondere bei unter 3%, so daß eine ausreichende Lagerstabilität der gegebenenfalls thermofixierten Hüllen gewährleistet ist.

Zur Verbesserung des Verarbeitungsverhaltens und des Öffnungsverhaltens können der Schicht bzw. bei coextrudierten Hüllen der innen liegenden Schicht und/oder außenliegenden Schicht Additive zugegeben werden. Hierbei haben sich vor allem Antiblock- und Gleitadditive als geeignet erweisen. Diese Antiblockadditive basieren z.B. auf Siliciumoxid.

Zur Reduzierung des Einflusses von Licht auf das Füllgut können einzelne Schichten mit UV-Licht-Absorbern additiviert werden. Insbesondere haben sich hier anorganische Pigmente wie Zinkoxide, Titanoxide, Eisenoxide und Siliciumoxide, insbesondere Zinkoxide bewährt. In einer besonders bevorzugten Ausführungsform wird das anorganische Feinstpigment mittels Masterbatch, dessen Trägermaterial mit dem Grundmaterial der Schicht kompatibel ist, in den Folienverbund eingebracht. Die Menge des Pigments liegt bei 0,1 bis 5 Gew.-%, bevorzugt 0,5 bis 2,5 Gew.-% bezogen auf das Gesamtgewicht der Hülle.

Die hergestellten Hüllen finden insbesondere Verwendung als Nahrungsmittelhüllen oder/und Hüllen für Tiernahrung. Sie eignen sich insbesondere für die Herstellung von Wurst oder zur Verpackung von Käse und Teigwaren.

Durch den Einsatz der erfindungsgemäßen Schlauchfolie ist dem Verarbeiter die Möglichkeit gegeben, ein Produkt herzustellen, das auch bei langen Lagerzeiten einen optimalen Schutz über die Hülle erfährt. Überraschenderweise hat es sich gezeigt, daß trotz der erwarteten nukleierenden Wirkung der beschriebenen nanoskaligen Schichtsilikate eine gereckte Schlauchfolie herstellbar ist, die eine deutlich verbesserte Sauerstoffbarriere aufweist.

Die Herstellung der erfindungsgemäßen Schlauchfolie erfolgt vorzugsweise nach dem "double bubble"- beziehungsweise nach dem "injected bubble"- Verfahren, bei dem zunächst das schlauchförmige Extrudat durch intensive Kühlung in den Festkörperzustand überführt wird und dann im weiteren Verlauf des Herstellungsverfahrens der so erhaltene dickwandige Primärschlauch (300 bis 600 µm) auf eine zur Festkörperverstreckung geeignete Temperatur wiedererwärmt wird, um anschließend zwischen zwei dicht abschließenden Walzenpaaren mittels Einschluß eines Druckluftpolsters sowohl in Quer- als auch in Längsrichtung verstreckt zu werden. Die Wiedererwärmung kann in einer oder mehreren Stufen zum Beispiel mittels heißer Luft, Heißdampf, temperiertem Wasserbad und/oder Infrarot-Strahlern erfolgen.

Die Verstreckung erfolgt mit einem Flächenreckgrad von mindestens 6 und in bevorzugter Weise von mindestens 8. Der Flächenreckgrad ist das Produkt aus Längs- und Querreckgrad. Der minimale Reckgrad in Längs- und in Querrichtung beträgt dabei jeweils mindestens 2,5.

Anschließend an die erste Verstreckstufe kann der Schlauch einer weiteren Wärmebehandlung (Thermofixierung) unterzogen werden. Zum Erreichen einer höheren Flexibiliät kann die Thermofixierung in Gegenwart von Wasser oder Wasserdampf erfolgen. Vor dem Aufwickeln der biaxial gereckten Schlauchfolie sollte diese ausreichend gekühlt werden um die Aktivierung von Schrumpfspannungen auf dem Wickel zu vermeiden.

Die erfindungsgemäße biaxial verstreckte Schlauchfolie wird üblicherweise in einem für Brüh- und Kochwurstanwendungen typischen Durchmesserbereich zwischen 30 und 150 mm hergestellt.

Ein weiterer Gegenstand der Erfindung ist die Verwendung des vorstehend beschriebenen Kunststoffdarms als Nahrungsmittelhülle, insbesondere zur Verpackung von Fleisch-, Milch- oder Teigprodukten. Bevorzugt wird dieser Kunststoffdarm als künstliche Wursthülle verwendet.

Der Gegenstand der Erfindung soll anhand der folgenden Beispiele näher erläutert werden.

### Beispiele:

Die nachfolgend aufgeführten Beispiele beschreiben biaxial verstreckte Schlauchfolien mit einem Durchmesser von 60 mm. Die aus unterschiedlichen Polymeren bestehenden Schichten der erfindungsgemäß coextrudierten Hüllen und der in den Vergleichsbeispielen eingesetzten Hüllen werden wie folgt abgekürzt:

| | | |
|---|---|---|
| PA 6 | Polyamid 6 | z.B.: Durethan B 40 F (Bayer AG) |
| CoPA | Copolyamid z.B.: PA 6/66 | z.B.: Ultramid C 35 F (BASF AG) |
| HV | polyolefinischer Haftvermittler | |
| | z.B.: modifiziertes Polypropylen | z.B.: Admer QF 551 (Mitsui Petrochemicals Ind., Ltd) |
| XX | Ethylen-Vinylalkohol-Copolymer | z.B.: EVAL F 101 BZ (Kuraray Co.; Ltd.) |
| aPA | teilaromatisches Copolyamid z.B. PA 6I/6T | z.B.: Selar PA 3426 (Du Pont De Nemours) |
| Nano-PA | PA 6 oder PA 6/66 mit nanodispersen Partikeln | z.B.: 1022 C 2 (UBE Industries Ltd.) |

Die in den Beispielen aufgeführten Schichtdicken der Einzelschichten beziehen sich auf die Endprodukte, die gereckten Schlauchfolien.

### Beispiel 1 (B.1):

| | | |
|---|---|---|
| Schicht 1: (Innenschicht) | PA 6 | 6 µm |
| Schicht 2: | HV | 5 µm |
| Schicht 3: | PA 6 | 5 µm |
| Schicht 4: | 12 % CoPA + 88 % Nano-PA | 20 µm |
| Schicht 5: (Außenschicht) | PA 6 | 5 µm |

### Beispiel 2 (B.2):

| | | |
|---|---|---|
| Schicht 1: (Innenschicht) | PA 6 | 6 µm |
| Schicht 2: | HV | 5 µm |
| Schicht 3: | PA 6 | 5 µm |
| Schicht 4: | CoPA | 20 µm |
| Schicht 5: (Außenschicht) | Nano-PA | 5 µm |

### Beispiel 3 (B.3):

| | | |
|---|---|---|
| Schicht 1: (Innenschicht) | PA 6 | 8 µm |
| Schicht 2: | HV | 4 µm |
| Schicht 3: | PA 6 | 12 µm |
| Schicht 4: | XX | 3 µm |
| Schicht 5: (Außenschicht) | Nano-PA | 20 µm |

### Vergleichsbeispiel 1 (VB.1):

| | | |
|---|---|---|
| Schicht 1: (Innenschicht) | PA 6 | 6 µm |
| Schicht 2: | HV | 5 µm |
| Schicht 3: | PA 6 | 5 µm |
| Schicht 4: | CoPA | 20 µm |
| Schicht 5: (Außenschicht) | PA 6 | 5 µm |

### Vergleichsbeispiel 2 (VB.2):

| | | |
|---|---|---|
| Schicht 1: (Innenschicht) | PA 6 | 8 µm |
| Schicht 2: | HV | 4 µm |
| Schicht 3: | PA 6 | 12 µm |
| Schicht 4: | XX | 3 µm |
| Schicht 5: (Außenschicht) | PA 6 | 22 µm |

Die relevanten Eigenschaften der hergestellten Wursthüllen werden nach folgender Methode ermittelt:

Die Beurteilung der mit den verschiedenen Hüllen hergestellten Würste erfolgt nach der Auskühlung der fertigen Würste auf Kühlhaustemperatur. Zur Herstellung der Musterwürste wurde jeweils das gleiche standardisierte Brühwurstprüfbrät verwendet. Der Fülldruck wird spezifisch für jede Wursthülle eingestellt. Die subjektive Beurteilung der einzelnen Prüfkriterien erfolgt nach Schulnoten, d.h. von 1 = bestes Ergebnis bis 6 = schlechtestes Ergebnis.

### Bräthaftung

Die am Darm anhaftende Menge an Brät wurde subjektiv bewertet.

| | |
|---|---|
| Note 1: | vollflächige Haftung zu 100 % bis |
| Note 6: | kein Brät verbleibt am Darm, Geleebildung |

### Schälbarkeit

Beurteilt wird, ob eine streifenförmige leichte Schälbarkeit gegeben ist, ohne daß der Darm in einer Vorzugsrichtung reißt.

### Zylindrische Form

Beurteilt wird die zylindrische Form der hängend gegarten Musterwürste.

### Barriereeigenschaften (Vergrauung)

Die Beurteilung der Barriereeigenschaften erfolgt durch subjektive visuelle Beurteilung der Farbvergrauung des Wurstbrätes an der Oberfläche. Daneben werden die Durchlässigkeiten gegen Wasserdampf und Sauerstoff meßtechnisch erfaßt:
Sauerstoffdurchlässigkeit in cm³·m⁻²·d⁻¹·bar⁻¹ gemessen bei 23°C und 75% rel. Feuchte lt. DIN 53 380;
Wasserdampfdurchässigkeit in g·m⁻²·d⁻¹ gemessen bei 23°C und 85% rel. Feuchte lt. DIN 53 122.

Die anwendungstechnische Beurteilung der gemäß den Beispielen und Vergleichsbeispielen hergestellten Hüllen ist in nachfolgenden Tabellen zusammenfaßt:

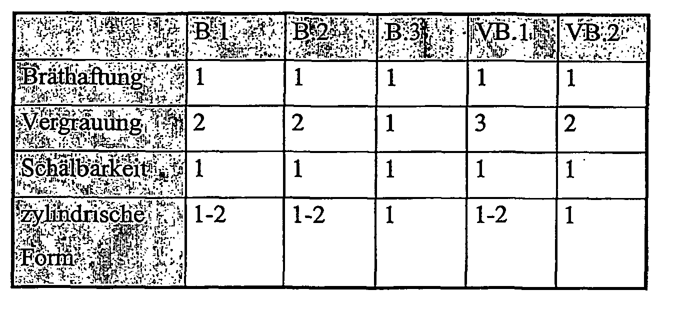

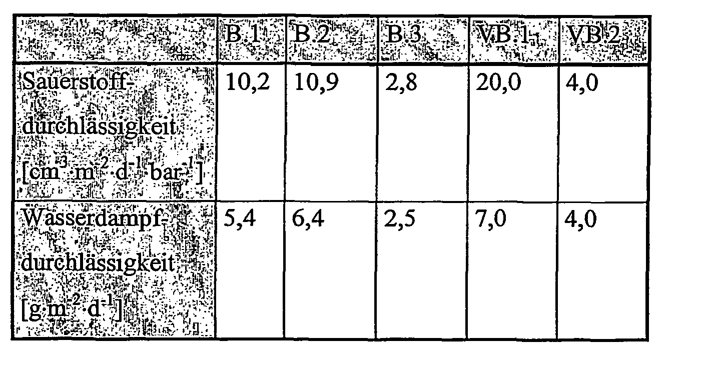

## Patentansprüche

1. Schlauchförmiger biaxial verstreckter, gegebenenfalls mehrschichtiger Kunststoffdarm, enthaltend wenigstens eine aus Polyamid und gegebenenfalls Polyolefinen bestehende Schicht, wobei die Schicht dispergierte Nanopartikel in einer Menge von 0,1 bis 4 Gew.-% enthält, deren kleinste in der Dispersion aus den Nanopartikeln eine starre Einheit bildenden Teilchen in zahlengewichtigen Mittel aller Teilchen in wenigstens einer beliebig wählbaren. Richtung eine Ausdehnung von nicht mehr als 100 mn auf weisen **dadurch gekennzeichnet, daß** die biaxiale Verstreckung mit einem Flächenreckgrad zwischen 8 und 11 erhalten wurde, wobei der Flächenreckgrad das Produkt aus dem Quer-Reckgrad q quer zur Machinenabzugsrichtung und dem Längs-Reckgrad 1 in Maschinenabzugsrichtung beschreibt.

2. Kunststoffdarm nach Ansprach 1, **dadurch gekennzeichnet, daß** die Nanopartikel Nanopartikel auf der Basis von Schichtsilikaten sind.

3. Kunststoffdarm nach Anspruch 1 oder 2, **dadurch gekennzeichnet, daß** die biaxiale Verstreckung nach dem Schlaucbreckverfahren aus dem Festkörper zustand erhalten wurde.

4. Kunststoffdarm nach einem der vorstehenden Ansprüche **dadurch gekennzeichnet, daß** die Schicht zu maximal 49,9 Gew.-% Polyolefine enthält.

5. Kanststoffdarm nach einem der vorstehenden Ansprüche, **dadurch gekennzeichnet, daß** der Kunststoffdarm polyolefinische Schichten aus Polyethylen, Polypropylen und/oder Ethylen/Propylen-Copolymeren oder deren Mischungen enthält.

6. Kunststoffdarm nach einem der vorstehenden Ansprüche, **dadurch gekennzeichnet, daß** der Kunststoffdarm Haftvermittlerschichten aus Polyolefinen enthält, die teilweise oder ausschließlich aus mit funktionellen Gruppen modifizierten Polyolefinen bestehen.

7. Kunststoffdarm nach einem der vorstehenden Ansprüche, **dadurch gekennzeichnet, daß** der Kunststoffdarm Schichten mit sauerstoffsperrendem Charakter enthält, die im wesentlichen aus Ethylen/Vinylalkohol- Copolymer mit 25-47 Gew.-% EthylenEinheiten und 75-53-Gew.% Vinylalkohol-Einheiten bestehen.

8. Kunststoffdarm nach einem der vorstehenden Ansprüche, **dadurch gekennzeichnet, daß** er thermofixiert ist.

9. Verwendung des Kunststoffdarms gemäß einem oder mehreren der vorstehenden Ansprüche als Nahrungsmittelhülle.

## Claims

1. Tubular biaxially oriented, where appropriate multilayer, synthetic casing, comprising at least one layer composed of polyamide and, where appropriate, of polyolefins, where the layer comprises from 0.1 to 4% by weight of dispersed nanoparticles whose smallest particles forming a rigid unit in the dispersion of the nanoparticles have a size in terms of number-average of all of the particles, of not more than 100 nm in at least one freely selectable direction **characterized in that** the area stretching factor used in obtaining the biaxial orientation was from to Claim 8 to 11, the area stretching factor being the product of the transverse stretching factor q perpendicularly to the direction of take-off from the machine and the longitudinal stretching factor 1 in the direction of take-off from the machine.

2. Synthetic casing according to Claim 1, **characterized in that** the nanoparticles are based on layer silicates.

3. Synthetic casing according to Claim 1 or 2, **characterized in that** the blown film stretching process is used to obtain the biaxial orientation from the solid state.

4. Synthetic casing according to any of the preceding claims, **characterized in that** the layer comprises not more than 49.9% by weight of polyolefins.

5. Synthetic casing according to any of the preceding claims, **characterized in that** the synthetic casing comprises polyolefinic layers made from polyethylene, polypropylene, and/or from ethylene-propylene copolymers, or a mixture of these.

6. Synthetic casing according to any of the preceding claims, **characterized in that** the synthetic casing comprises tie layers made from polyolefins, which are composed to some extent or entirely of polyolefins modified with functional groups.

7. Synthetic casing according to any of the preceding claims, **characterized in that** the synthetic casing comprises layers with oxygen-barrier character, which are substantially composed of ethylene-vinyl alcohol copolymer having from 25 to 47% by weight of ethylene units and from 75 to 53% by weight of vinyl alcohol units.

8. Synthetic casing according to any of the preceding claims, **characterized in that** it has been heat-set.

9. Use of the synthetic casing according to one or more of the preceding claims as a food casing.

## Revendications

1. Boyau tubulaire en matière plastique, étiré biaxialement, le cas échéant multicouche, contenant au moins une couche consistant en polyamide et le cas échéant en polyoléfines, dans lequel la couche contient des nanoparticules dispersées en une quantité de 0,1 à 4 % en poids, dont la plus petite particule formant une unité rigide dans la dispersion des nanoparticules, dans la moyenne pondérée en nombre de toutes les particules, présente dans au moins une direction pouvant être choisie à volonté une extension de pas plus de 100 nm, **caractérisé en ce que** l'étirement biaxial a été obtenu avec un degré d'étirement surfacique entre 8 et 11, sachant que le degré d'étirement surfacique décrit le produit du degré d'étirement transversal q, transversalement par rapport à la direction d'extraction de la machine, par le degré d'étirement longitudinal 1 dans la direction d'extraction de la machine.

2. Boyau en matière plastique selon la revendication 1, **caractérisé en ce que** les nanoparticules sont des nanoparticules à base de silicates feuilletés.

3. Boyau en matière plastique selon la revendication 1 ou 2, **caractérisé en ce que** l'étirement biaxial a été obtenu en partant de l'état de corps solide d'après le procédé d'étirement de paraison.

4. Boyau en matière plastique selon l'une des revendications précédentes, **caractérisé en ce que** la couche contient des polyoléfines jusqu'à concurrence de 49,9 % en poids au maximum.

5. Boyau en matière plastique selon l'une des revendications précédentes, **caractérisé en ce que** le boyau en matière plastique contient des couches polyoléfiniques en polyéthylène, en polypropylène et/ou en copolymères d'éthylène et de propylène ou en leurs mélanges.

6. Boyau en matière plastique selon l'une des revendications précédentes, **caractérisé en ce que** le boyau en matière plastique contient des couches d'agents d'adhérence en polyoléfines qui consistent en partie ou exclusivement en polyoléfines modifiées par des groupes fonctionnels.

7. Boyau en matière plastique selon l'une des revendications précédentes, **caractérisé en ce que** le boyau en matière plastique contient des couches à caractère de barrière de diffusion vis-à-vis de l'oxygène, qui consistent essentiellement en copolymère d'éthylène de l'alcool vinylique avec 25 à 47 % en poids d'unités d'éthylène et 75 à 53 % en poids d'unités d'alcool vinylique.

8. Boyau en matière plastique selon l'une des revendications précédentes, **caractérisé en ce qu'**il est thermofixé.

9. Utilisation du boyau en matière plastique selon l'une ou plusieurs des revendications précédentes comme enveloppe de denrées alimentaires.
